# EUROPÄISCHE PATENTSCHRIFT

(11) **EP 2 859 932 B1**
(45) Veröffentlichungstag und Bekanntmachung des Hinweises auf die Patenterteilung: **07.08.2019**
(21) Anmeldenummer: 13004899.4
(22) Anmeldetag: 11.10.2013
(51) Int. Cl.: B01D 46/00, B01D 46/10, B01D 29/01, H01M 8/02

(54) **Filter**
Filter
Filtre

(43) Veröffentlichungstag der Anmeldung: 15.04.2015
(60) Teilanmeldung: 14003760.7
(73) Patentinhaber: Massold, Andreas, 72336 Balingen (DE); Sommer, Frank, 72336 Balingen (DE)
(72) Erfinder: Massold, Andreas, 72336 Balingen (DE); Sommer, Frank, 72336 Balingen (DE)
(74) Vertreter: Späth, Dieter

(56) Entgegenhaltungen:
- EP-A2- 1 020 272
- EP-A2- 1 306 915
- WO-A1-2008/070699
- DE-A1- 3 344 187
- GB-B- 2 150 851
- US-A1- 2006 005 518
- US-A1- 2011 061 656

## Beschreibung

Die Erfindung betrifft ein Verfahren zur Herstellung eines Filters mit einer Dichtung mit den Merkmalen des Oberbegriffs des Anspruchs 1.

Mit Filter ist ein vorzugsweise flächiges, d. h. im Verhältnis zu Länge und Breite dünnes Filtermedium, beispielsweise ein Gewebe, Gewirke, Gestrick oder Vlies gemeint, dessen Fasern beispielsweise aus Metall, Kunststoff oder Glas bestehen. Die Aufzählungen sind beispielhaft und nicht abschließend. Das Filter kann eben sein oder eine dreidimensionale Form aufweisen, beispielsweise zick-zack-, mäander-, zylinder-, kegelstumpfförmig oder zweidimensional gewölbt sein.

Das Filter weist eine vorzugsweise linienförmige Dichtung insbesondere entlang eines Randes auf, wobei die Dichtung auch flächenförmig sein kann. Der Rand kann ein Außenrand oder, wenn das Filter ein oder mehrere Löcher aufweist, ein Innenrand sein. Die Dichtung kann auch innerhalb des Filters mit Abstand von Rändern des Filters verlaufen. Die Dichtung besteht insbesondere aus einem technischen, dauerelastischen Kunststoff, beispielsweise einem Elastomer, Hartkunststoff, Polyamid, Polyester, beispielsweise Fluorsilikon für ein Ölfilter oder beispielsweise Polypropylen als Träger und nicht unbedingt als Filter einer Membran für eine Brennstoffzelle. Die Aufzählung ist beispielhaft und nicht abschließend. Die Dichtung ist insbesondere ein Vollmaterial, also kein Schaum, d. h. sie weist keine beabsichtigten Poren, Gaseinschlüsse, Lunker oder dgl. Hohlräume auf.

Zusätzlich zu der Dichtung kann das Filter einen Rahmen aufweisen, der dem Filter eine mehr oder weniger große Stabilität gibt.

Bekannt ist beispielsweise ein Aufkleben oder sonstiges Anbringen einer vorgefertigten Dichtung an einem Filter. Auch ist es möglich, eine Dichtung durch Spritzgießen an einem Filter anzubringen, wozu das Filter in eine Spritzgießform eingelegt wird. Ein Spritzgießen erfordert ein Spritzgießwerkzeug, das die Form der herzustellenden Dichtung als Hohlraum aufweist, der als Kavität bezeichnet wird. Damit eine plastifizierte Masse beim Spritzgießen die Kavität vollständig ausfüllt ist ein ausreichender Querschnitt der Kavität erforderlich, die auch von der zu durchströmenden Länge der Kavität abhängt. Eine Höhe von 400 µm der Kavität wird heute als Untergrenze des machbaren beim Kunststoff-Spritzgießen angesehen, sofern Oberflächen, mit denen der plastifizierte Kunststoff beim Spritzgießen in Berührung kommt, glatt sind. Befindet sich ein Gewebe, Vlies oder dgl. Filtermedium in der Kavität, muss die Kavität wegen einer Bremswirkung des Filtermediums erheblich höher sein, es wird von mindestens der doppelten bis dreifachen Höhe der Kavität ausgegangen. Das Filtermedium bremst nicht nur den plastifizierten und unter Druck in die Kavität gespritzten Kunststoff, sondern der fließende Kunststoff schiebt Fasern des Filtermediums vor sich her und knautscht die Fasern zusammen, so dass sie die Kavität versperren.

Die internationale Patentanmeldung WO 2008/070 699 A1 offenbart ein Wickelfilter, bei dem ein streifenförmiges Filterelement um einen verstrebten Rahmen gewickelt ist. In Stirnansicht ist das Wickelfilter oval. Das Filterelement besteht aus einem gewellten Streifen aus Filtermaterial, der vergleichbar Wellpappe mit einer Deckschicht ebenfalls aus Filtermaterial versehen ist. An einem Längsrand des Filterelements sind Wellentäler zwischen dem gewellten Filtermaterial und der Deckschicht mit einem Klebstoff verschlossen und an einem gegenüberliegenden Längsrand sind die jeweils anderen Wellentäler, die nach dem Wickeln der Deckschicht zugewandt sind, ebenfalls mit einem Klebstoff verschlossen. Ein axialer Fluidstrom durch das Wickelfilter kann dadurch auf der einen Stirnseite des Wickelfilters nur in die unverschlossenen Wellentäler des gewellten Filtermaterials eintreten, die am anderen Stirnende verschlossen sind, so dass der Fluidstrom durch das Filtermaterial durchtreten muss um auf der anderen Stirnseite des Wickelfilters durch die dort unverschlossenen Wellentäler des gewellten Filtermaterials auszutreten. Der Klebstoff in diesen Wellentälern verbindet die Wickellagen des Filterelements.

Zur Abdichtung einer Brennstoffzelle offenbart die Patentanmeldung EP 1 306 915 A2 ein nicht polymerisiertes Dichtungsmaterial umlaufend als geschlossene Dichtraupe auf ein Trägerelement aufzutragen und anschließend in einem Vulkanisationswerkzeug zu formen und zu polymerisieren. Das Trägerelement kann eine lonenaustauschmembran der Brennstoffzelle sein.

Zu einer Abdichtung zwischen zwei Filtergehäuseteilen schlägt das Patent GB 2 150 851 B vor, einen Dichtmassenstreifen auf eine Filtermembran zu drucken.

Die Patentanmeldung EP 1 020 272 A2 offenbart eine Vorrichtung zum Auftragen eines Dichtungsstreifens auf beispielsweise einen Ventil- oder einen Gehäusedeckel. Die Vorrichtung weist zwei Speicherbehälter für zwei Komponenten der Dichtung, zwei Zuführleitungen, die von den Speicherbehältern zu einer Mischkammer führen, zwei Dosierventile in den Zuführleitungen und eine Düse als Auslass der Mischkammer auf.

Aufgabe der Erfindung ist ein Verfahren zur Herstellung eines Filters mit einer Dichtung vorzuschlagen, das eine kleine Höhe der Dichtung ermöglicht. Mit Höhe der Dichtung ist deren Erhebung über eine Ober- oder Deckfläche des Filters gemeint, also eine gedachte Fläche, die Fasern des Filters an äußersten Stellen berührt.

Diese Aufgabe wird erfindungsgemäß durch die Merkmale des Anspruchs 1 gelöst. Erfindungsgemäß wird die Dichtung formgebungswerkzeuglos durch Urformen hergestellt und zugleich am Filter angebracht bzw. an das Filter angeformt. Mit "formgebungswerkzeuglos" ist gemeint, dass kein formgebendes Werkzeug wie eine Gieß- oder Spritzgießform verwendet wird, das die Form der herzustellenden Dichtung als Hohlraum, d. h. als Kavität aufweist, weder vollständig noch Abschnitte der Dichtung. Erfindungsgemäß wird die Dichtung mit einer Düse auf das Filter aufgetragen.

Mit einer Düse lässt sich die Dichtung normalerweise in einem Durchlauf in gewünschter Dicke am Filter anbringen, wobei mehrere Durchläufe für eine größere Breite und/oder Höhe der Dichtung möglich sind. Die Düse kann formgebend sein, d. h. eine Mündung der Düse weist eine einem Querschnitt der urzuformenden Dichtung entsprechende Kontur auf ggf. unter Berücksichtigung eines Schwundes oder evtl. eines Aufquellens des Dichtungsmaterials. Die Dichtung kann allerdings auch mit einer gewöhnlichen, beispielsweise kegelstumpfförmigen oder flachen, gerade oder schräg angeschnittenen Düse auf das Filter aufgebracht werden, die plastifiziertes Dichtungsmaterial zu einer Art Raupe formt, die das Filter durchdringt und auf einer Ober- und/oder Unterseite des Filters einen linienförmigen Dichtwulst bildet.

Es ist Dichtungsmaterial verwendbar, das bei Raumtemperatur auf das Filter aufgebracht werden kann. Vorzugsweise wird das Dichtungsmaterial erwärmt und mit einer wasser-, strom- oder in anderer Weise temperierten Düse auf das Filter aufgebracht. Das Dichtungsmaterial ist in diesem Fall beispielsweise ein plastifizierter Duro- oder Thermoplast oder ein thermisch vernetzender Kunststoff wie beispielsweise Silikon.

Die Erfindung ermöglicht eine dünne und niedrige Dichtung, weil ein plastifiziertes Dichtungsmaterial beim Umformen keine Kavität durchströmen muss, die eine Mindestdicke oder Mindesthöhe der Dichtung erfordert. Ausschuss durch vorzeitiges Erstarren einer plastifizierten Dichtungsmasse oder durch Eindringen der Dichtungsmasse in ein Spritzgießwerkzeug in Bereiche des Filters, die keine Dichtung aufweisen sollen, wird vermieden.

Anstelle der Dichtung oder zusätzlich zu der Dichtung kann das Filter einen Rahmen aufweisen, der dem Filter eine mehr oder weniger große Stabilität gibt. Es kann auch die Dichtung zugleich einen Rahmen bilden, der das Filter stabilisiert. Das Filter kann auch innerhalb seiner Fläche stabilisierende Streben, ein Gitter oder dgl. aufweisen. Erfindungsgemäß ist der Rahmen in gleicher Weise formgebungswerkzeuglos durch Urformen angebracht wie die Dichtung.

Ist die Dichtung an einem (Außen- oder Innen-)Rand des Filters angebracht, sieht eine Ausgestaltung der Erfindung vor, dass die Dichtung den Rand des Filters umgreift, d. h. die Dichtung eine Art Fassung für den Rand des Filters bildet. Diese Ausgestaltung der Erfindung verbessert eine Dichtwirkung und vermeidet ein Lösen kurzer, durch Schneiden des Filters entstandener Fasern am Rand des Filters.

Eine Ausgestaltung der Erfindung sieht vor, dass das Filter beim Anbringen der Dichtung auf einer Auflage aufliegt, die in dem Bereich der Dichtung eine Vertiefung, beispielsweise eine Rinne für eine linienförmige Dichtung aufweist. Diese Ausgestaltung der Erfindung ermöglicht das Anbringen einer Dichtung am Filter, die das Filter durchdringt und sich beidseitig über Ober- bzw. Deckflächen des Filters erhebt.

Eine Ausgestaltung der Erfindung sieht vor, dass das Filter einen Träger für eine Membran beispielsweise für eine Brennstoffzelle bildet. Das Filter, dient in diesem Fall als mechanischer Träger der Membran und hat nicht unbedingt die Funktion eines Filters.

Eine Ausgestaltung der Erfindung sieht eine Höhe der Dichtung über eine Ober- bzw. Deckfläche des Filters von etwa 500 µm oder weniger, vorzugsweise von etwa 200 µm oder weniger und besonders bevorzugt von etwa 20 µm oder weniger vor. Grundsätzlich ermöglicht die Erfindung eine Dichtung mit beliebig kleiner Höhe über der Ober- bzw. Deckfläche des Filters beginnend ab einer Höhe von Null.

Eine Ausgestaltung der Erfindung sieht ein dreidimensional umgeformtes Filter vor. Dazu wird ein ebenes oder eindimensional gewölbtes, beispielsweise gerolltes Filter nach dem Anbringen der Dichtung beispielsweise durch eine Art Tiefziehen dreidimensional zu einem beispielsweise gewölbten Körper umgeformt.

Eine Weiterbildung der Erfindung sieht vor, dass am Filter mindestens eine Erhöhung wie die Dichtung formgebungswerkzeuglos durch Urformen angebracht ist, die höher als die Dichtung ist. Die Erhöhung kann aus demselben Material wie die Dichtung bestehen. Die mindestens eine Erhöhung kann beispielsweise einen Fuß oder Abstandshalter zum Positionieren oder für den Einbau des Filters oder auch zum Greifen, insbesondere einem automatischen Greifen des Filters beispielsweise mit einem Roboter, zur Handhabung des Filters beispielsweise bei einem Ver- oder Auspacken oder einem Einbau des Filters dienen. Die Erhöhung hat beispielsweise eine Höhe von ein oder mehreren mm über einer Ober- oder Deckfläche des Filters und kann, wenn sie sich wegen ihrer Höhe nicht in einem Durchgang bzw. einer Schicht am Filter anbringen lässt, durch mehrfachen Auftrag beispielsweise mit einer Düse oder durch Drucken in entsprechend vielen Schichten am Filter angebracht sein.

Die Erfindung wird nachfolgend anhand in der Zeichnung dargestellter Ausführungsbeispiele näher erläutert. Es zeigen:
- Figur 1: eine Aufsicht auf ein erfindungsgemäßes Filter;
- Figuren 2a, b: Schnitte durch das Filter aus Figur 1 im Bereich einer Dichtung in größerer Darstellung;
- Figur 3: ein zweites Ausführungsbeispiel der Erfindung.

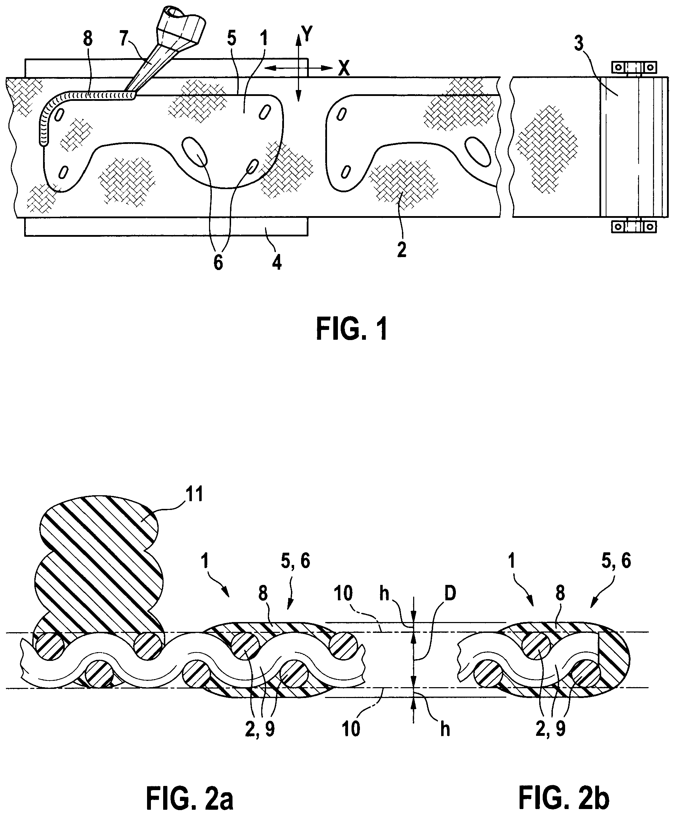

Das in Figur 1 gezeigte, erfindungsgemäße Filter 1 weist ein Gewebe 2 aus Kunststofffasern auf, das -vorzugsweise maschinell- von einer Vorratsrolle 3 abgezogen und auf einen CNC-gesteuerten, in X- und Y-Richtung, d. h. längs und quer zum Gewebe 2 verfahrbaren Tisch 4, der eine Auflage für das Filter 1 zum Anbringen einer Dichtung 8 bildet, aufgelegt wird. Anstelle des Gewebes ist beispielsweise auch ein Gestrick, Gewirk oder Vlies verwendbar. Anstatt aus Kunststoff können die Fasern beispielsweise auch aus Glas, Metall, Kohlenstoff oder Stein oder Mischungen bestehen. Ein Außenrand 5 und Innenränder 6 des Filters 1 sind in Figur 1 mit Linien dargestellt. Die Innenränder 6 umschießen Löcher im Filter 1 für beispielsweise Durchführungen oder Verschraubungen eines nicht dargestellten Filter- oder Maschinengehäuses, das eine Trennebene aufweist, in die der das Filter 1 angeordnet wird.

Mit einer Düse 7, die in Figur 1 um 90° zur Seite gekippt gezeichnet ist und die in einer Normalebene schräg oder senkrecht zum Filter 1 bzw. zum Tisch 4 angeordnet ist, wird ein Dichtungsmaterial entlang der Ränder 5, 6 auf das Filter 1 aufgetragen. Das Dichtungsmaterial wird pastös aufgetragen und bildet nach einem Aushärten eine dauerelastische, linienförmige Dichtung 8 entlang der Ränder 5, 6 des Filters 1. Die Dichtung 8 lässt sich auch flächig und/oder innerhalb der Dichtung 1 und nicht nur an den Rändern 5, 6 auftragen (nicht dargestellt). Wie im Schnitt der Figur 2a zu sehen durchdringt die Dichtung 8 das Gewebe 2 des Filters 1 und umschließt dessen Fasern 9, so dass eine hermetisch dichte Abdichtung ohne Durchlässe zwischen den Fasern 9 gebildet ist. Die Dichtung 8 ist dünn, sie erhebt sich im Ausführungsbeispiel nur um etwa 20 µm über eine Ober- bzw. Deckfläche 10 des Filters 1. Die Ober- oder Deckfläche 10 ist eine gedachte Fläche, die die Fasern 9 des Filters 1 an deren äußersten Punkten berührt. Im Ausführungsbeispiel hat das Filter 1 eine Dicke D von etwa 150 µm, wobei die mit h bezeichnete Erhebung der Dichtung 8 nicht proportional zur Dicke D des Filters 1 sondern grundsätzlich unabhängig von der Dicke D des Filters 1 ist. Die Erhebung h der Dichtung 8 über die Ober- bzw. Deckfläche 10 des Filters 1 kann auch kleiner sein, sie kann grundsätzlich beliebig zwischen Null, einigen µm, einigen 10 µm oder einigen 100 µm hoch sein.

Die Düse 7 ist temperiert, beispielsweise wassertemperiert zum Auftragen von beispielsweise Silikon oder beispielsweise stromtemperiert zum Auftragen von beispielsweise Thermoplasten. Zum Auftragen auf das Filter 1 wird das Dichtungsmaterial erwärmt und plastifiziert, wenn es nicht von sich aus fließfähig ist, und mit der wasser-, strom- oder in anderer Weise temperierten Düse 7 auf das Filter 1 aufgebracht. Das Dichtungsmaterial ist beispielsweise ein plastifizierter Duro- oder Thermoplast, ein Elastomer oder ein thermisch vernetzender Kunststoff wie beispielsweise Silikon. Allerdings schließt die Erfindung ein Dichtungsmaterial, das mit einer nicht temperierten Düse 7 bei Raumtemperatur auf das Filter 1 aufgebracht werden kann, nicht aus.

Der Tisch 4, der wie gesagt eine Auflage für das Filter 1 zum Anbringen der Dichtung 8 bildet, weist eine Rinne entlang der Ränder 5, 6 der Dichtung 1 auf, so dass sich auch an einer Unterseite des Filters 1 eine Erhebung der Dichtung 8 über die Ober- bzw. Deckfläche 10 der Dichtung 1 bildet. Die Höhe h der Erhebung der Dichtung 8 über die Ober- bzw. Deckfläche 10 des Filters 1 kann auf beiden Seiten des Filters 1 gleich oder verschieden groß sein. Der Auftrag der Dichtung 8 mit der Düse 1 ermöglicht eine Dichtung 8, die dünner bzw. deren Erhebung h über die Ober- bzw. Deckfläche 10 des Filters 1 kleiner ist als es mit einem Spritzgießen einer Dichtung in einem Spritzgießwerkzeug möglich ist.

Nach dem Anbringen der Dichtung 8 werden die Innenränder 6 geschnitten und das Filter 1 entlang des Außenrandes 5 ausgeschnitten. Die Ränder 5, 6 des Filters 1 werden innerhalb der Dichtung 8 geschnitten, die Dichtung 8 fixiert die Fasern 9 an den Rändern 5, 6 und verhindert, dass durch den Schnitt entstehende kurze Faserstücke sich beim Gebrauch vom Filter 1 lösen.

Wird die Dichtung 8 an einem Rand des Filters 1 angebracht, wenn das Filter 1 vor dem Anbringen der Dichtung 8 geschnitten oder gestanzt wird, umschließt die Dichtung 8 wie in Figur 2b zu sehen den Rand des Filters 1.

Wie in Figur 2a links zu sehen lässt sich das Dichtungsmaterial oder eine andere Masse auch höher als die Dichtung 8 zu Erhöhungen 11 "auftürmen". Die Erhöhungen 11 können beispielsweise durch mehrmaliges "Auftupfen" von Dichtungsmaterial oder einer anderen Masse oder in einer vom Filter 1 weg gerichteten, beispielsweise geraden oder schraubenlinienförmigen Bewegung der Düse 7 herstellen. Die Erhöhungen 11 können beispielsweise Füße als Abstandshalter oder zu einem Ausrichten des Filters 1 oder zu einer automatisierten Handhabung des Filters 1 mit einem nicht dargestellten Roboter dienen.

Nach dem Anbringen der Dichtung 8 durch Auftrag mit der Düse 7 oder durch Aufdrucken kann das Filter 1 beispielsweise durch eine Art Tiefziehen gewölbt, d. h. dreidimensional umgeformt werden (nicht dargestellt).

Das Dichtungsmaterial ist beispielsweise ein Elastomer, ein Hartkunststoff wie Polyamid, Polyester, für technische Öle beispielsweise Fluorsilikon oder als Träger für eine Membran für eine Brennstoffzelle beispielsweise Polypropylen. Nach dem Aushärten des Dichtungsmaterials ist die Dichtung 8 dauerelastisch. Die Dichtung 8 besteht aus einem technischen Kunststoff und weist keine beabsichtigten Hohlräume auf, ist also kein Schaum sondern ein dauerelastisches Vollmaterial ohne beabsichtigte Poren oder dgl. Das gilt sowohl für die gedruckte- als auch für die mit der Düse 7 angebrachte Dichtung 8.

Anstelle der Dichtung 8 oder zusätzlich zur Dichtung 8 kann auch ein Rahmen beispielsweise aus einem Hartkunststoff in gleicher Weise wie die Dichtung 8 am Filter 1 angebracht sein. Es kann auch die Dichtung 8 zugleich einen Rahmen des Filters 1 bilden. Das Filter 1 kann in gleicher Weise wie einen Rahmen an seinem/n Rand/Rändern auch Versteifungen oder Verstrebungen innerhalb seiner Fläche aufweisen.

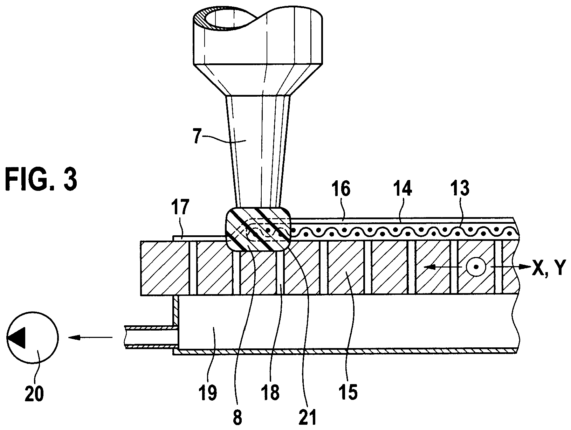

Figur 3 zeigt ein Vlies mit Fasern aus Polypropylen als Träger 13 für eine Membran 14 einer nicht dargestellten Brennstoffzelle. Das Vlies kann zwar auch als Filter aufgefasst werden, in erster Linie dient es allerdings wie gesagt als Träger für die Membran 14. Das den Träger 13 bildende Vlies ist auf einen CNCgesteuert in X- und Y-Richtung verfahrbaren Saugtisch 15 aufgelegt, wobei auf das Vlies die Membran 14 und darauf eine Folie 16 zum Evakuieren aufgelegt ist.

Die Folie 16 überlappt die Membran 14 und das Vlies 13, so dass Ränder 17 der Folie 16 seitlich außerhalb des Vlies und der Membran 14 auf dem Saugtisch 15 aufliegen. Der Saugtisch 15 ist mit Saugkanälen 18 durchsetzt und weist eine Evakuierkammer 19 an seiner Unterseite auf, durch die Luft mit einer Vakuumpumpe 20 absaugbar ist, so dass die aufgelegte Folie 16 die Membran 14 auf das den Träger 13 bildende Vlies saugt. Wie zu Figur 1 beschrieben wird mit einer Düse 7 ein plastifiziertes Dichtungsmaterial entlang von Rändern der Membran 14 und des Vlies aufgebracht, das nach Aushärten eine linienförmige, dauerelastische Dichtung 8 bildet, die die Membran 14 und das den Träger 13 bildende am Rand umgreift und in das Vlies eindringt. Die Membran 14 ist durch die Dichtung 8 mechanisch mit dem Vlies verbunden und weist die Dichtung 8 an ihrem Rand auf. Die Folie 16 schmilzt beim Aufbringen des Dichtungsmaterials, so dass sie sich ohne Weiteres von der Membran 14 abheben lässt. Auch hier lässt sich die Dichtung 8 durch das Auftragen mit der Düse 7 dünn und mit beliebig niedriger, bei Null beginnender Erhebung über eine Ober- oder Deckfläche der Membran 14 und des den Träger 13 bildenden Vlies anbringen. Die Erfindung ermöglicht auch hier eine Dichtung 8, die dünner ist und/oder eine niedrigere Erhebung über die Ober- oder Deckfläche der Membran 14 und des Trägers 13 aufweist, als es durch Spritzgießen möglich wäre. Als Träger 13 für die Membran 14 einer Brennstoffzelle besteht die Dichtung 8 beispielsweise aus Polypropylen.

In Figur 3 ist eine rinnenförmige Vertiefung 21 im Saugtisch 15 im Bereich der Dichtung 8 zu sehen, so dass sich die Dichtung 8 auch auf der der Düse 7 abgewandten Seite über die Ober- bzw. Deckfläche des den Träger 13 bildenden Vlies erhebt.

Die Erfindung ermöglicht auch ein mehrlagiges Filter mit einer formgebungswerkzeuglos durch Urformen an den Rändern und/oder innerhalb einer Fläche des Filters angebrachten Dichtung und/oder Rahmen zu verbinden.

## Patentansprüche

1. Verfahren zur Herstellung eines Filters (1) mit einer Dichtung (8), wobei die Dichtung (8) formgebungswerkzeuglos durch Urformen am Filter (1) angebracht, nämlich mit einer Düse (7) auf das Filter (1) aufgetragen wird,
**dadurch gekennzeichnet, dass**
die Düse eine temperierte Düse ist.

2. Verfahren nach Anspruch 1, **dadurch gekennzeichnet, dass** das Filter (1) einen Rahmen aufweist, der formgebungswerkzeuglos durch Urformen am Filter (1) angebracht ist.

3. Verfahren nach Anspruch 1 oder 2, **dadurch gekennzeichnet, dass** die Dichtung (8) und/oder der Rahmen an einem Rand (5, 6) des Filters (1) angebracht ist und insbesondere den Rand (5, 6) umgreift.

4. Verfahren nach einem der vorhergehenden Ansprüche, **dadurch gekennzeichnet, dass** das Filter (1) beim Anbringen der Dichtung (8) und/oder des Rahmens auf einer Auflage (4; 15) aufliegt, die eine Vertiefung (21) im Bereich der Dichtung (8) und/oder des Rahmens aufweist.

5. Verfahren nach einem der vorhergehenden Ansprüche, **dadurch gekennzeichnet, dass** das Filter (1) einen Träger (13) einer Membran (14) bildet.

6. Verfahren nach einem der vorhergehenden Ansprüche, **dadurch gekennzeichnet, dass** die Dichtung (8) und/oder der Rahmen eine Erhebung (h) über dem Filter (1) von bis zu etwa 500 µm, vorzugsweise von bis zu etwa 200 µm und besonders bevorzugt von bis zu etwa 20 µm aufweist.

7. Verfahren nach einem der vorhergehenden Ansprüche, **dadurch gekennzeichnet, dass** das Filter (1) dreidimensional umgeformt ist.

8. Verfahren nach einem der vorhergehenden Ansprüche, **dadurch gekennzeichnet, dass** das Filter (1) mindestens eine urformend und formgebungswerkzeuglos aufgebrachte Erhöhung (11) aufweist, die höher als die Dichtung (8) ist.

## Claims

1. A method for producing a filter (1) including a gasket (8), whereby the gasket (8) is applied to the filter (1) through master forming without a moulding tool, in particular by applying the gasket (8) to the filter (1) with a nozzle (7), **characterized in that** the nozzle is a temperature-controlled nozzle.

2. A method according to claim 1, **characterized in that** the filter (1) includes a frame that is applied to the filter (1) through master forming without a moulding tool.

3. A method according to claim 1 or 2, **characterized in that** the gasket (8) and/or the frame is applied at an edge (5, 6) of the filter (1) and in particular envelops the edge (5, 6) of the filter (1).

4. A method according to one of the preceding claims, **characterized in that,** when the gasket (8) and/or the frame is applied, the filter (1) rests on a support (4; 15) having an indentation (21) in a portion of the gasket (8) and/or of the frame.

5. A method according to one of the preceding claims, **characterized in that** the filter (1) forms a support (13) of a membrane.

6. A method according to one of the preceding claims, **characterized in that** the gasket (8) and/or the frame have a height (h) above the filter (1) of up to about 500 µm, preferably of up to about 200 µm and more preferably of up to about 20 µm.

7. A method according to one of the preceding claims, **characterized in that** the filter (1) is subjected to a shape change in three dimensions.

8. A method according to one of the preceding claims, **characterized in that** the filter (1) has at least one protrusion (11) that is applied through master forming without a moulding tool, which protrusion (11) is taller than the gasket (8).

## Revendications

1. Procédé de fabrication d'un filtre (1) pourvu d'une garniture d'étanchement (8), laquelle garniture d'étanchement (8) est façonnée sur le filtre (1) par prototypage, avec absence d'outil de mise en forme, plus précisément déposée sur ledit filtre (1) à l'aide d'une buse (7),
**caractérisé par le fait que**
la buse est une buse à équilibrage de température.

2. Procédé selon la revendication 1, **caractérisé par le fait que** le filtre (1) est muni d'un cadre façonné par prototypage, sur ledit filtre (1), avec absence d'outil de mise en forme.

3. Procédé selon la revendication 1 ou 2, **caractérisé par le fait que** la garniture d'étanchement (8) et/ou le cadre est (sont) façonné(e)(s) sur un bord (5, 6) du filtre (1), et ceinture(nt) notamment ledit bord (5, 6).

4. Procédé selon l'une des revendications précédentes, **caractérisé par le fait que** le filtre (1) repose, lors du façonnage de la garniture d'étanchement (8) et/ou du cadre, sur un élément d'appui (4 ; 15) doté d'un renfoncement (21) dans la région de ladite garniture d'étanchement (8) et/ou dudit cadre.

5. Procédé selon l'une des revendications précédentes, **caractérisé par le fait que** le filtre (1) constitue un support (13) d'une membrane (14).

6. Procédé selon l'une des revendications précédentes, **caractérisé par le fait que** la garniture d'étanchement (8) et/ou le cadre présente(nt), au-dessus du filtre (1), une cote en hauteur (h) mesurant jusqu'à environ 500 µm, de préférence jusqu'à environ 200 µm, et jusqu'à environ 20 µm avec préférence particulière.

7. Procédé selon l'une des revendications précédentes, **caractérisé par** une mise en forme tridimensionnelle du filtre (1).

8. Procédé selon l'une des revendications précédentes, **caractérisé par le fait que** le filtre (1) est pourvu d'au moins une zone rehaussée (11) façonnée par prototypage, avec absence d'outil de mise en forme, et dont la hauteur est supérieure à celle de la garniture d'étanchement (8).
